# EUROPÄISCHE PATENTSCHRIFT

(11) **EP 1 363 382 B1**
(45) Veröffentlichungstag und Bekanntmachung des Hinweises auf die Patenterteilung: **26.12.2007**
(21) Anmeldenummer: 02405402.5
(22) Anmeldetag: 17.05.2002
(51) Int. Cl.: H02K 7/06, H02K 5/22, H02K 5/173

(54) **Elektroantrieb**
Electric drive
Entraînement électrique

(43) Veröffentlichungstag der Anmeldung: 19.11.2003
(73) Patentinhaber: Saia-Burges Murten AG, 3280 Murten (CH)
(72) Erfinder: BÖTTGER, Axel, 01324 Dresden (DE); WATZEK, Michael, 1796 Courgevaux (CH); RIEDO, Daniel, 3212 Gurmels (CH)
(74) Vertreter: Störzbach, Michael Andreas

(56) Entgegenhaltungen:
- EP-A- 0 385 203
- EP-A- 0 557 697
- EP-A- 0 569 306
- EP-A- 0 623 989
- EP-A- 0 911 214
- WO-A-99/44274
- DE-A- 2 458 722
- FR-A- 2 555 835
- JP-A- 63 190 265
- US-A- 4 398 109
- US-A- 5 313 125
- US-A- 5 798 592
- US-A1- 2002 018 348
- US-B1- 6 262 509
- PATENT ABSTRACTS OF JAPAN vol. 013, no. 298 (E-784), 10. Juli 1989 (1989-07-10) -& JP 01 077442 A (HIROSHI TERAMACHI), 23. März 1989 (1989-03-23)
- PATENT ABSTRACTS OF JAPAN vol. 1995, no. 02, 31. März 1995 (1995-03-31) -& JP 06 311686 A (DAIKIN IND LTD), 4. November 1994 (1994-11-04)
- PATENT ABSTRACTS OF JAPAN vol. 2000, no. 07, 29. September 2000 (2000-09-29) -& JP 2000 116082 A (JAPAN SERVO CO LTD), 21. April 2000 (2000-04-21)
- PATENT ABSTRACTS OF JAPAN vol. 2000, no. 04, 31. August 2000 (2000-08-31) -& JP 2000 014118 A (MINEBEA CO LTD), 14. Januar 2000 (2000-01-14)
- PATENT ABSTRACTS OF JAPAN vol. 1998, no. 09, 31. Juli 1998 (1998-07-31) -& JP 10 094236 A (SANYO ELECTRIC CO LTD;SANYO SEIMITSU KK), 10. April 1998 (1998-04-10)
- PATENT ABSTRACTS OF JAPAN vol. 1999, no. 11, 30. September 1999 (1999-09-30) -& JP 11 155275 A (ASMO CO LTD), 8. Juni 1999 (1999-06-08)
- PATENT ABSTRACTS OF JAPAN vol. 012, no. 281 (E-641), 2. August 1988 (1988-08-02) -& JP 63 059746 A (CANON INC), 15. März 1988 (1988-03-15)

## Beschreibung

Die vorliegende Erfindung betrifft einen Linearantrieb, mit Stator und Rotor. Der Rotor derartiger Elektroantriebe ist im allgemeinen mittels mindestens zweier Lager beidseitig des Rotors gelagert (cf. JP-A-01 077 442). Diese Lösung gewährleistet allerdings eine stabile Lagerung des Rotors, aber die Lagerstellen beanspruchen viel Raum, und die Lager, insbesondere Kugellager, stellen einen verhältnismässig teuren Bestandteil des Elektroantriebs dar.

Es ist allerdings auch bekannt, nur einseitig des Rotors eine Lagerstelle anzubringen, aber das führt zu einer unstabilen Lagerung (cf. EP-A-623 989). Insbesondere führen Kippbewegungen infolge Lagerspiel des Rotors zu einer seitlichen Verlagerung des Rotors über dessen ganze Länge. Es muss daher bei entsprechendem Aufwand ein verhältnismässig grosser Luftspalt zwischen Rotor und Stator vorgesehen werden, um Berührungen zwischen Rotor und Stator zu vermeiden. Dies wieder bedingt für gleiche Leistung grössere Abmessungen und damit entsprechend höhere Kosten.

Aus der FR 2 555 835 ist ein Elektroantrieb mit einem einzigen Rotorlager bekannt, welches innerhalb der axialen Länge des Rotors angeordnet ist. Der Elektroantrieb ist als Drehantrieb ausgebildet.

Aus der US 4,398,109 ist ein Elektroantrieb mit einer verschiebbaren Gewindestange und einem einzigen Rotorlager bekannt, welches innerhalb der axialen Länge des Rotors angeordnet ist. Die Endanschläge für die Gewindestange sind an einem Rotorteil angeordnet und mit Stufen versehen, um ein Einschneiden der Gewindestange in das Rotorteil zu verhindern. Diese Ausgestaltung hat den Nachteil, dass die Herstellung des Elektroantriebs relativ teuer und aufwändig ist.

Ziel der Erfindung ist es, die genannten Hauptnachteile zu vermeiden, also eine kostengünstige, kompakte Bauweise zu ermöglichen. Die Lösung ist durch den Elektroantrieb gemäss Anspruch 1 gegeben. Ist ein Rotorlager axial innerhalb der axialen Länge des Rotors anbeordnet, ist nur eine Lagerstelle erforderlich und eventuelle Kippbewegungen des Rotors wirken sich bei einer gegebenen totalen Rotorlänge nur je entsprechend der Hälfte dieser Länge aus, so dass bei sonst gleichen Voraussetzungen mit einem geringeren Luftspalt und damit insgesamt geringeren Gesamtabmessungen gearbeitet werden kann. Weitere spezifische Konstruktionsmerkmale und deren Vorteile sind aus der folgenden Beschreibung und der Zeichnung ersichtlich, in welcher
- Fig. 1: einen Axialschnitt durch einen elektrischen Linearantrieb, und
- Fig. 2 + 3: räumliche Ansichten etwas anderer Ausführungen eines Linearantriebs
darstellen.

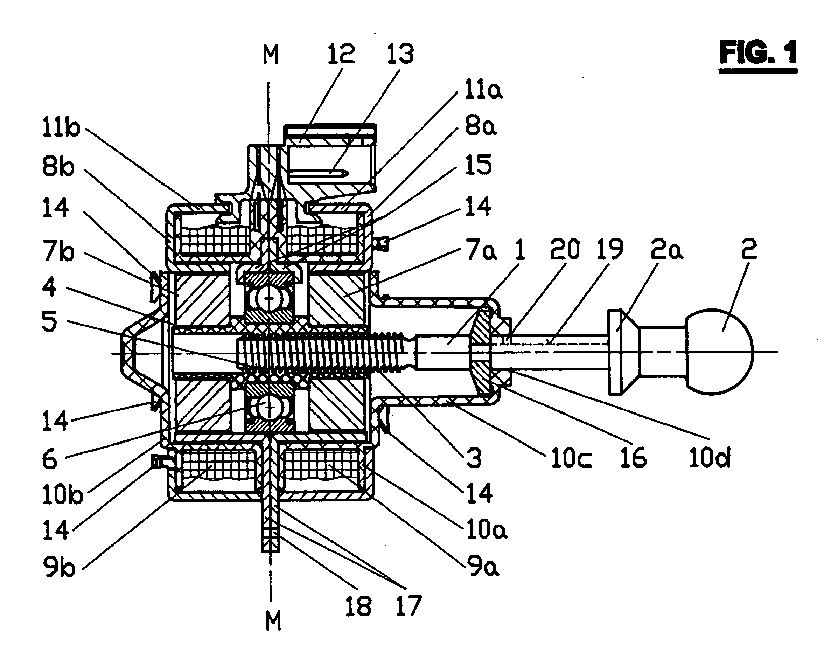

Der Linearantrieb gemäss Fig. 1 weist eine Stellstange (1) auf, deren Kopf (2) mit einem einstellbaren Teil, beispielsweise dem Reflektor einer Fahrzeugbeleuchtung, gekuppelt sein kann. Das dem Kopf (2) gegenüberliegende Ende der Stellstange (1) ist als Schraube (3) ausgebildet und greift in eine Hülse (4), die in der Mitte mit Innengewinde (5) versehen ist. Die Hülse (4) dient als Nabe eines Rotors. Sie ist mittels eines Kugellagers (6) drehbar gelagert. Beidseits des Kugellagers sind symmetrisch zu demselben auf der Nabe (4) zwei gleichartige, permanentmagnetische Ringe (7a bzw. 7b) befestigt. Der Stator des Antriebs weist zwei im wesentlichen symmetrisch zur Mittelebene (M) des Motors liegende Teile (8a und 8b) auf. Die beiden Statorteile sind mit je einer Spule (9a bzw. 9b) versehen, die in je einem Spulenkörper (10a bzw. 10b) liegen. In der für Schrittmotoren üblichen Weise sind die Statorbleche aussen geschlossen und innen mit nicht näher bezeichneten, den Rotorringen (7a bzw. 7b) gegenüber liegenden Statorzähnen versehen. Wie in Fig. 1 oben dargestellt, bilden verkürzte Statorabschnitte (11a bzw. 11b) eine Ausnehmung bzw. ein Fenster, in welchem ein Steckergehäuse (12) gehalten ist. Anschlussdrähte der Statorspulen sind mit Kontaktstiften (13) verbunden, welche dem Anschluss eines Steckers eines Anschlusskabels dienen. Einer der Kontaktstifte dient als Masse-Kontaktstift und ist mit einem als Schneidklemme ausgebildeten Fortsatz des Statorbleches verbunden. Beide Statorteile sind mit Befestigungsnocken (14) versehen, welche zur Verbindung des Antriebs mit einem geeigneten Träger dienen können. Die beiden Statorteile sind mit nach innen gerichteten Winkeln (15) versehen, welche mit je einer radialen und einer axialen Passfläche den äusseren Ring des Kugellagers (6) umfasssen und damit eine genaue gegenseitige radiale und axiale Zentrierung zwischen Rotor und Stator gewährleisten. Wie in Fig. 1 unten ersichtlich, ist der Spulenkörper (10a) einteilig mit einem etwa zylindrischen Fortsatz (10c) versehen, an dessen äusserem Ende eine Führung (10d) für die Stellstange (1) gebildet ist. Das äussere Ende des Fortsatzes (10c) dient auch als Endanschlag für einen mit der Stellstange (1) verbundenen Teller (16) und den Bund (2a) des Kopfs 2.

In Fig. 1 sind zwei Ergänzungsmöglichkeiten bzw. Varianten angedeutet. Die Statoreisen könnten, wie in Fig. 1 unten angedeutet, an diametral gegenüber liegenden Stellen mit nach aussen stehenden Flanschen (17) mit einem durchgehenden Loch (18) zur Montage des Antriebs versehen sein. Zur Drehsicherung der Stellstange (1) kann dieselbe beispielsweise mit einer Nut (19) versehen sein, in welche ein Nocken (20) des Fortsatzes (10c) des Spulenkörpers (10a) eingreift.
Die sich aus der Gesamtkonzeption des Antriebs ergebenden Vorteile, soweit sie nicht bereits erwähnt wurden, können im wesentlichen wie folgt zusammengefasst werden:
Bei gleicher Baugrösse des Motors wird das Statorpaket um die bisher durch die Lagerung genutzte Länge breiter.
Das Lager wird axial und radial direkt durch die Haltstatoren befestigt.
Sind Flansche (17, 18) vorgesehen, ist eine Befestigung des Antriebs ohne zusätzliche Teile möglich. Dabei kann der Schwerpunkt des Motors gegebenenfalls unter der Befestigungsstelle liegen, was im Falle von Schwingungen vorteilhaft ist. Da keine zusätzlichen Teile verwendet werden, ist die Kraftkette Befestigung - An-/Abtriebsschraube kurz und steif. Entsprechendes gilt bei Montage mittels der Befestigungsnocken (14), d.h., auch in diesem Falle sind keine besonderen Befestigungsorgane anzubringen.
Wie erwähnt, dient auch das Statorblech zur direkten elektrischen Verbindung mit dem Masse-Kontakt-Stift.

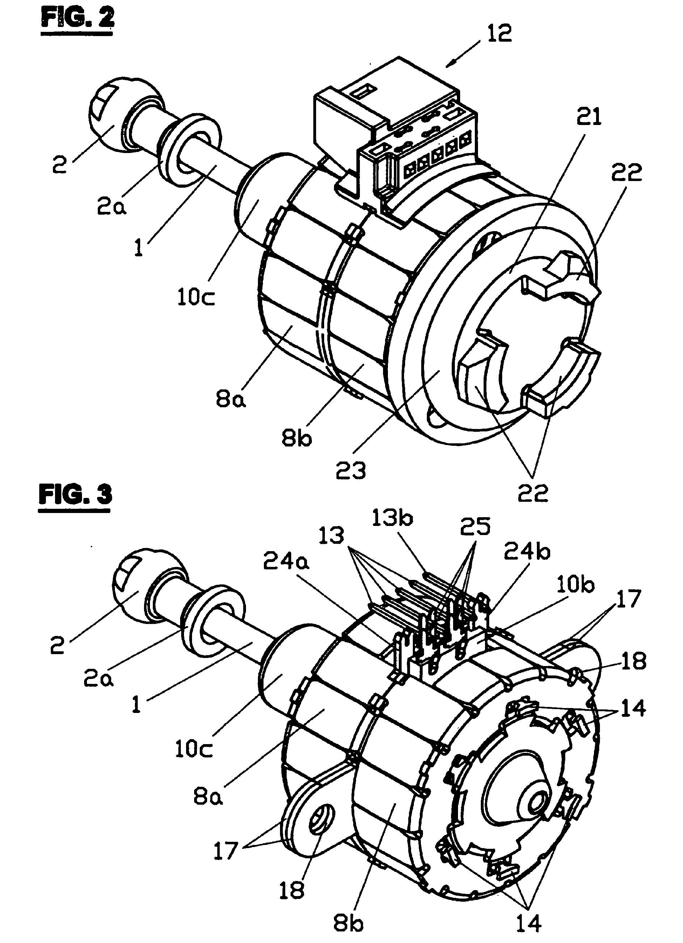

Fig.2 zeigt eine Ausführungsvariante des Antriebs. Der Aufbau entspricht weitgehend demjenigen nach Fig. 1, und entsprechende Teile sind gleich bezeichnet wie in Fig. 1. Die der Stellstange gegenüber liegende Stirnseite des Spulenkörpers ist in diesem Fall mit einem zylindrischen Fortsatz (21) versehen, an dem Montagenocken (22) angeformt sind. Der Fortsatz kann auch als separates Teil an die Nocken (14) angebaut werden. Auf den Fortsatz (21) ist ein Dichtungsring (23) aufgesetzt. Bei dieser Ausführung kann der Antrieb sehr einfach in eine entsprechend für den Durchtritt der Nocken (22) mit Ausschnitten versehene Öffnung eines Gehäuses, beispielsweise eines Scheinwerfergehäuses, eingeschoben und bajonettartig verankert werden, wobei der Dichtungsring (23) für eine sichere Abdichtung des Innenraums, in welchem sich die aktiven Teile des Antriebs befinden, sorgt. Es ergibt sich somit eine besonders vorteilhafte Verwendung des erfindungsgemässen Antriebs gemäss Anspruch 10.

Fig. 3 entspricht weitgehend der Fig. 2. Sie zeigt zusätzlich die Flansche 17 und je einen als Schneidklemme ausgebildeten Fortsatz 24a bzw. 24b der Statorteile 8a und 8b. Nur mit der Schneidklemme 24b ist ein Kontaktstift 13b verbunden, welcher dem Massenanschluss dient. Die übrigen Kontaktstifte 13 sind mit Schneidklemmen 25 verbunden, welche in den Spulenkörpern 10a (in Fig. 3 hinten, nicht sichtbar) und 10b verankert und mit den Wicklungsanschlüssen verbunden sind. Die Schneidklemmen 24 und 25 können auch der direkten Verbindung mit Leitern eines Anschlusskabels dienen.

## Patentansprüche

1. Elektroantrieb, welcher folgende Komponenten umfasst:
einen Stator (8, 9, 10),
einen Rotor (7a, 7b) mit einer Gewindehülse (4, 5),
ein einziges Rotorlager (6), welches axial innerhalb der axialen Länge des Rotors angeordnet ist,
eine axial verschiebbare Gewindestange (1), welche in die Gewindehülse (4, 5) greift und einen ersten Anschlag (16) und einen zweiten Anschlag (2a) umfasst, und
einen Fortsatz (10c) mit einem Ende (10d), durch welches die Gewindestange (1) hindurchgeführt ist, **dadurch gekennzeichnet, daß**
das Ende (10d) zwischen dem ersten (16) und zweiten Anschlag (2a) angeordnet ist und als Endanschlag für die beiden Anschläge (16, 2a) wirkt.

2. Antrieb nach Anspruch 1, **dadurch gekennzeichnet, dass** die Gewindestange (1) mit einer Nut (19) versehen ist, in welche ein Nocken (20) des Fortsatzes (10c) eingreift.

3. Antrieb nach Anspruch 1 oder 2, **dadurch gekennzeichnet, dass** das Lager (6) axial in der Rotormitte (M) angebracht ist.

4. Antrieb nach einem der Ansprüche 1 - 3, **dadurch gekennzeichnet, dass** Stator (8, 9, 10) und Rotor (4, 5, 7) je zwei axial versetzte Teile (8a, 8b; 7a, 7b) aufweisen, wobei das Lager (6), bzw. der äussere Ring eines Kugellagers, zwischen den Statorteilen (8a, 8b) gehalten ist.

5. Antrieb nach Anspruch 4, **dadurch gekennzeichnet, dass** das Lager (6) zwischen Passflächen von tiefgezogenen und/oder gebogenen Stator-Blechteilen (15) gehalten ist und dabei die Statorteile radial und axial zentriert.

6. Antrieb nach einem der Ansprüche 1 - 5, **dadurch gekennzeichnet, dass** die Stator-Blechteile (8a, 8b) radiale Befestigungsflansche (17, 18) und Halter (11a, 11b) für eine Anschlussbuchse (12) zur Aufnahme des Steckers eines Anschlusskabels aufweist.

7. Antrieb nach einem der Ansprüche 1 - 6, **dadurch gekennzeichnet, dass** Statorblechfortsätze (24a, 24b) als Schneidklemmen ausgebildet sind, von welchen mindestens einer (24b) mit einem Kontaktstift (13b) oder einem Anschlussleiter einen Massenanschluss bildet.

8. Antrieb nach einem der Ansprüche 2 - 7, mit mindestens einem Spulenkörper (10a) aus Kunststoff, **dadurch gekennzeichnet, dass** der Spulenkörper als feststehender Teil einer Drehsicherung (19, 20) für die Gewindestange (1) dient.

9. Antrieb nach einem der Ansprüche 1 - 8, **gekennzeichnet durch** einteilig mit dem Statorblech (8a, 8b) geformte Montageflansche (17, 18).

10. Antrieb nach einem der Ansprüche 2 - 9, **dadurch gekennzeichnet, dass** er an mindestens einer seiner Stirnseiten mit Montageorganen, z.B. Nocken (22) zur Bajonettverbindung und Dichtungsmitteln, z.B. einem Dichtungsring (23) versehen ist.

11. Antrieb nach einem der vorangehenden Ansprüche, **dadurch gekennzeichnet, dass** der erste Anschlag ein Teller (16) und/oder der zweite Anschlag ein Bund (2a) ist.

## Claims

1. Electro drive, comprising the following components:
a stator (8, 9, 10),
a rotor (7a, 7b) having a threaded sleeve (4, 5),
a single rotor bearing (6) that is axially arranged within the axial length of the rotor,
an axially displaceable threaded rod (1) that engages in the threaded sleeve (4, 5) and comprises a first stop (16) and a second stop (2a), and
a prolongation (10c) having an end (10d) through which the threaded rod (1) is guided,
**characterised in that**
the end (10d) is located between the first (16) and the second stop (2a) and serves as an end stop for the two stops (16, 2a).

2. Drive according to claim 1, **characterised in that** the threaded rod (1) is provided with a groove (19) in which a cam (20) of the prolongation (10c) engages.

3. Drive according to claim 1 or 2, **characterised in that** the bearing (6) is arranged axially in the centre (M) of the rotor.

4. Drive according to one of claims 1 to 3, **characterised in that** the stator (8, 9, 10) and the rotor (4, 5, 7) each comprise two axially offset portions (8a, 8b; 7a, 7b), the bearing (6), or the outer race of a ball bearing, being held between the stator portions (8a, 8b).

5. Drive according to claim 4, **characterised in that** the bearing (6) is held between fitting surfaces of deep-drawn and/or bent stator plate portions (15), thereby centring the stator portions radially and axially.

6. Drive according to one of claims 1 to 5, **characterised in that** the stator plate portions (8a, 8b) comprise radial mounting flanges (17, 18) and holders (11a, 11b) for a connector socket (12) for receiving the plug of a connecting cable.

7. Drive according to one of claims 1 to 6, **characterised in that** stator plate projections (24a, 24b) are designed as insulation displacement contacts of which at least one (24b) forms a ground connection with a contact pin (13b) or a connecting lead.

8. Drive according to one of claims 2 to 7, comprising at least one bobbin (10a) of synthetic material, **characterised in that** the bobbin serves as a stationary part of a rotational lock (19, 20) for the threaded rod (1).

9. Drive according to one of claims 1 to 8, **characterised by** mounting flanges (17, 18) that are integrally formed with the stator plate (8a, 8b).

10. Drive according to one of claims 2 to 9, **characterised in that** it is provided on at least one of its face sides with mounting members, e.g. cams (22) for a bayonet attachment, and with sealing means, e.g. a sealing ring (23).

11. Drive according to one of the preceding claims, **characterised in that** the first stop is a disk (16) and/or the second stop is a collar (2a).

## Revendications

1. Entraînement électrique, comprenant les composants suivants:
un stator (8, 9, 10),
un rotor (7a, 7b) muni d'une douille taraudée (4, 5),
un palier de rotor (6) unique qui est agencé axialement dans la longueur axiale du rotor,
une tige filetée (1) axialement déplaçable qui s'engrène dans la douille taraudée (4, 5) et comporte une première butée (16) et une deuxième butée (2a), et
un prolongement (10c) ayant une extrémité (10d) par laquelle passe la tige filetée (1),
**caractérisé en ce que**
ladite extrémité (10d) est agencée entre la première (16) et la deuxième butée (2a) et sert de butée d'extrémité pour les deux butées (16, 2a).

2. Entraînement selon la revendication 1, **caractérisé en ce que** la tige filetée (1) est pourvue d'une rainure (19) dans laquelle s'engage une came (20) du prolongement (10c).

3. Entraînement selon la revendication 1 ou 2, **caractérisé en ce que** le palier (6) est monté axialement au centre (M) du rotor.

4. Entraînement selon l'une des revendications 1 à 3, **caractérisé en ce que** le stator (8, 9, 10) et le rotor (4, 5, 7) comprennent chacun deux parties axialement décalées (8a, 8b; 7a, 7b), le palier (6), respectivement la bague extérieure d'un roulement à billes, étant retenu(e) entre les parties du stator (8a, 8b).

5. Entraînement selon la revendication 4, **caractérisé en ce que** le palier (6) est retenu entre des surfaces de contact de parties (15) embouties et/ou pliées de la tôle statorique et centre ainsi radialement et axialement les parties du stator.

6. Entraînement selon l'une des revendications 1 à 5, **caractérisé en ce que** les parties de la tôle statorique (8a, 8b) présentent des brides de fixation (17, 18) radiales et des retenues (11a, 11b) pour une embase de connecteur (12) destinée à recevoir la fiche d'un câble de raccordement.

7. Entraînement selon l'une des revendications 1 à 6, **caractérisé en ce que** des prolongements de la tôle statorique (24a, 24b) forment des bornes à déplacement d'isolation dont l'un (24b) au moins constitue avec une broche de contact (13b) ou un fil de raccordement une connexion à la masse.

8. Entraînement selon l'une des revendications 2 à 7, comprenant au moins une bobine (10a) en matériau synthétique, **caractérisé en ce que** la bobine sert de partie fixe d'une fixation en rotation (19, 20) de la tige filetée (1).

9. Entraînement selon l'une des revendications 1 à 8, **caractérisé par** des brides de montage (17, 18) formées d'une pièce avec la tôle statorique (8a, 8b).

10. Entraînement selon l'une des revendications 2 à 9, **caractérisé en ce qu'**il est pourvu, sur l'une au moins de ses faces frontales, d'organes de montage, par exemple de cames (22) pour un accouplement à baïonnette, et de moyens d'étanchéité, par exemple d'une bague d'étanchéité (23).

11. Entraînement selon l'une des revendications précédentes, **caractérisé en ce que** la première butée est un disque (16) et/ou la deuxième butée est un collet (2a).
